# FASCICULE DE BREVET EUROPEEN

(11) **EP 4 241 325 B1**
(45) Date de publication et mention de la délivrance du brevet: **05.06.2024**
(21) Numéro de dépôt: 21801545.1
(22) Date de dépôt: 28.10.2021
(51) Int. Cl.: H01M 8/04014, H01M 8/241, H01M 8/0267, H01M 8/249

(54) **PILE À COMBUSTIBLE COMPRENANT UN MODULE DE PLAQUE BIPOLAIRE APTE À GÉNÉRER DE LA CHALEUR**
BRENNSTOFFZELLE MIT BIPOLARPLATTENMODUL, WELCHES WÄRME GENERIEREN KANN
FUEL CELL COMPRISING A BIPOLAR PLATE MODULE CAPABLE OF GENERATING HEAT

(30) Priorité: 05.11.2020 FR 2011392
(43) Date de publication de la demande: 13.09.2023
(73) Titulaire: Safran Power Units, 31200 Toulouse (FR)
(72) Inventeur: STEPHAN, Rémi André Armand, 77550 MOISSY-CRAMAYEL (FR); HORDE, Théophile, 77550 MOISSY-CRAMAYEL (FR)
(74) Mandataire: Argyma
(86) Numéro de dépôt international: PCT/EP2021/080013
(87) Numéro de publication internationale: WO 2022/096368

(56) Documents cités:
- EP-A1- 2 061 113
- EP-A2- 1 351 330
- US-A1- 2004 229 099
- US-A1- 2008 118 788

## Description

### Domaine technique

La présente invention concerne le domaine des piles à combustible et plus particulièrement des piles à combustible hautes températures à échanges de protons.

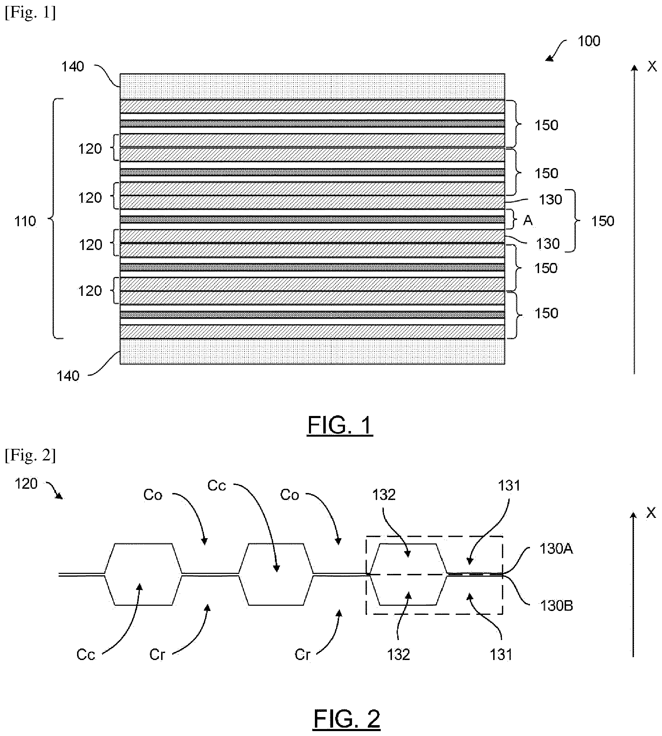

De manière connue, en référence aux figures 1 et 2, une pile à combustible 100 s'étend longitudinalement suivant un axe d'empilement X et comprend un empilement 110 d'une pluralité de modules bipolaires 120, formé chacun par un assemblage de deux plaques bipolaires 130A, 130B. La pile à combustible 100 comporte successivement une alternance de modules bipolaires 120 et d'assemblages membrane-électrodes A, connu sous l'abréviation AME. De manière connue, chaque AME comprend une membrane d'électrolyte et deux électrodes (une anode et une cathode) positionnées de part et d'autre de la membrane.

La pile à combustible 100 comprend également deux plaques terminales 140, placées aux extrémités de l'empilement 110, comme représenté sur la [Fig.1]. Les plaques terminales 140 sont reliées par des tirants (non représentés) qui permettent la compression de l'empilement 110, assurant ainsi l'étanchéité de la pile à combustible 100.

De manière connue, un assemblage membrane-électrodes A et deux plaques bipolaires 130, prenant en sandwich l'assemblage membrane-électrodes A, forment une cellule électrochimique 150.

Pour former une réaction électrochimique dans la pile à combustible 100, chaque module bipolaire 120 est, de manière connue, alimenté par un fluide oxydant et un fluide réducteur, par exemple du dihydrogène et du dioxygène, qui réagissent lorsqu'ils sont mis en contact dans une réaction d'oxydo-réduction de manière à générer de l'énergie électrique. Chaque module bipolaire 120 est également alimenté en fluide caloporteur, pour la régulation thermique de la pile à combustible 100. Les plaques bipolaires 130 d'un module bipolaire 120 permettent la distribution de tels fluides dans la cellule électrochimique 150.

Pour cela, comme représenté sur la [Fig.2], chaque plaque bipolaire 130A, 130B d'un module bipolaire 120 comprend des portions concaves 131, intérieures à la cellule électrochimique 150, et des portions convexes 132, extérieures à la cellule électrochimique 150, permettant la formation de canaux internes dans le module bipolaire 120 pour la circulation des différents fluides. De manière connue, les portions concaves 131 permettent la formation d'un canal Co de circulation du fluide oxydant et d'un canal Cr de circulation du fluide réducteur.

De manière connue, pour la formation d'un module bipolaire 120, les portions concaves 131 des deux plaques bipolaires 130A, 130B sont solidarisées ensemble de manière à ce que les portions convexes 132 forment un canal Ce de circulation du fluide caloporteur dans le module bipolaire 120. Un tel fluide caloporteur permet d'évacuer les calories produites lors du chauffage de la pile à combustible 100 et de la maintenir à sa température nominale de fonctionnement.

De manière connue, au démarrage de la pile à combustible, celle-ci doit dans un premier temps être chauffée au-dessus de 100°C afin d'éviter la présence d'eau à l'état liquide. Une fois chauffée, la pile à combustible peut être alimentée en réactifs et produire de l'électricité. Plusieurs solutions existent dans l'art antérieur pour chauffer la pile à combustible.

Tout d'abord, il est connu de prévoir un dispositif de chauffage, indépendant de la pile à combustible, par exemple une résistance électrique, pour chauffer le canal de circulation du fluide caloporteur de la pile à combustible. Autrement dit, de manière astucieuse, le fluide caloporteur est utilisé pour chauffer la pile à combustible lors du démarrage et pour la refroidir lorsqu'elle est en fonctionnement nominal.

Pour garantir l'autonomie de la pile à combustible, une telle résistance électrique est alimentée électriquement par une batterie d'alimentation. Cependant, la quantité d'énergie nécessaire à l'alimentation d'une telle résistance électrique est très importante. Une telle batterie d'alimentation présente un coût élevé ainsi qu'une masse importante ce qui présente un inconvénient majeur pour une utilisation embarquée, notamment, dans un aéronef.

On connait également par le document WO2014136098 un dispositif de chauffage qui comprend un réacteur catalytique indépendant pour chauffer le canal de circulation du fluide caloporteur de la pile à combustible. Contrairement à un chauffage résistif qui exige une source d'électricité, le réacteur catalytique enseigne de faire réagir les fluides oxydant et réducteur avec un élément chimique catalyseur, de manière à générer un mélange d'eau et de chaleur pour chauffer le fluide caloporteur. Une telle solution est avantageuse étant donné que le réacteur catalytique utilise les mêmes fluides oxydant et réducteur que la pile à combustible.

Cependant, un tel dispositif de chauffage indépendant ne permet pas de chauffer de manière optimale la pile à combustible du fait des pertes thermiques lors de la circulation du fluide caloporteur. De plus, un tel dispositif de chauffage augmente de manière importante l'encombrement et la masse de la pile à combustible, comme présenté précédemment. EP 2061113 A1, EP 1351330A2 et US 2008/118788 A1 décrivent des empilements de piles à combustible comprenant des plaques bipolaires qui sont équipées d'une partie couverte de catalyseur, ledit catalyseur étant configuré pour promouvoir la réaction exothermique entre l'hydrogène et l'oxygène afin de contribuer au préchauffage de l'empilement.

L'invention vise ainsi à éliminer au moins certains de ces inconvénients en proposant une pile à combustible comprenant un système de chauffage simple et efficace permettant une montée en température homogène de la pile à combustible. La pile à combustible comprenant le système de chauffage selon l'invention est en outre léger et présente un encombrement réduit, ce qui permet son intégration dans tout type de véhicule.

### PRESENTATION DE L'INVENTION

L'invention concerne une pile à combustible s'étendant longitudinalement suivant un axe d'empilement et comprenant une alternance de modules bipolaires et d'assemblages membrane-électrodes de manière à former un empilement comprenant au moins une cellule électrochimique, deux plaques terminales s'étendant aux extrémités de l'empilement, chaque module bipolaire comprenant au moins un premier canal principal de circulation d'un fluide oxydant, un deuxième canal principal de circulation d'un fluide réducteur et un troisième canal principal de circulation d'un fluide caloporteur.

La pile à combustible est remarquable en ce qu'elle comprend au moins un module de chauffage, monté entre les plaques terminales, comprenant au moins un canal auxiliaire comprenant un élément chimique catalyseur, le canal auxiliaire étant configuré pour faire circuler un mélange de fluide oxydant et de fluide réducteur de manière à générer de la chaleur lors de la réaction du fluide oxydant, du fluide réducteur et de l'élément chimique catalyseur afin de chauffer la pile à combustible.

La pile à combustible selon l'invention permet d'intégrer un système de réchauffage directement au coeur de l'empilement pour permettre un réchauffage initial de la pile à combustible au démarrage de celle-ci. Grâce à l'invention, il n'est pas nécessaire d'ajouter un équipement extérieur à la pile à combustible ou une source d'énergie supplémentaire pour permettre cette montée en température.

De plus, l'intégration d'un module de chauffage monté entre les plaques terminales permet de limiter la dissipation et donc les pertes de chaleur, permettant de réduire de manière importante le temps de chauffage de la pile à combustible. La montée en température est également avantageusement homogène.

La pile à combustible selon l'invention présente également un encombrement réduit et une masse limitée, ce qui permet de l'intégrer dans des systèmes embarqués et notamment dans un aéronef.

Chaque cellule électrochimique peut avantageusement être réchauffée au démarrage de la pile à combustible par conduction.

De manière préférée, le module de chauffage comprend au moins un canal principal de circulation du fluide caloporteur, permettant de réchauffer le fluide caloporteur dans le module de chauffage au plus proche du canal auxiliaire. Le fluide caloporteur ainsi réchauffé circulant dans chaque cellule électrochimique permet de réchauffer l'ensemble de la pile à combustible.

Dans une forme de réalisation, le module de chauffage est exempt de canal principal de circulation du fluide oxydant et de canal principal de circulation du fluide réducteur. Le module de chauffage est ainsi apte à ne générer que du chauffage, permettant la formation d'un module de chauffage plus simple et moins onéreux.

De préférence, la pile à combustible comprend une pluralité de modules de chauffage, permettant une montée en température plus rapide et plus efficace.

Dans une forme de réalisation préférée, au moins un module bipolaire est un module de chauffage, désigné module mixte, le module mixte comprenant au moins un premier canal principal de circulation du fluide oxydant, un deuxième canal principal de circulation du fluide réducteur, un troisième canal principal de circulation du fluide caloporteur et un canal auxiliaire, comprenant un élément chimique catalyseur, qui est configuré pour faire circuler un mélange de fluide oxydant et de fluide réducteur. Un module mixte permet de former un module comprenant deux plaques bipolaires intégrant directement le canal auxiliaire comprenant l'élément chimique catalyseur. Autrement dit, un module mixte permet d'une part de réaliser le chauffage préalablement au démarrage et d'autre part de générer de l'électricité en fonctionnement nominal. La pile à combustible comporte ainsi des modules bipolaires à chauffage intégré permettant de chauffer individuellement chaque module bipolaire.

De manière préférée, la pile à combustible comporte au moins deux modules mixtes et au moins un assemblage membrane-électrodes positionné entre les deux modules mixtes de manière à former une cellule mixte apte à générer à la fois de l'énergie électrique et de la chaleur. Une cellule mixte permet d'intégrer la fonction de chauffage directement au coeur d'une cellule électrochimique, ce qui présente un avantage important puisqu'il permet de limiter l'ajout d'un module de chauffage indépendant. La pile à combustible selon l'invention présente ainsi un encombrement et une masse sensiblement équivalents à ceux d'une pile à combustible de l'art antérieur tout en intégrant une fonction de réchauffage.

De préférence encore, la pile à combustible comprend une alternance d'une pluralité de modules mixtes et d'assemblage membrane-électrodes de manière à former un empilement d'une pluralité de cellules mixtes. Un tel empilement permet de former une pile à combustible performante, dans laquelle toutes les cellules sont aptes à la fois à générer de la chaleur et de l'énergie électrique. La montée en température est ainsi rapide et homogène dans toute la pile à combustible.

De manière préférée, chaque module mixte comprenant une première plaque bipolaire et une deuxième plaque bipolaire, chaque plaque bipolaire comprenant un moins une portion concave extérieure au module mixte et une portion convexe intérieure au module mixte, la portion convexe de la première plaque bipolaire étant positionnée en vis-à-vis de la portion convexe de la deuxième plaque bipolaire, les portions convexes montés en vis-à-vis formant un canal de circulation, chaque module mixte comprend une plaque de séparation, montée entre la première plaque bipolaire et la deuxième plaque bipolaire de manière à former dans le canal de circulation, le troisième canal principal de circulation du fluide caloporteur et le canal auxiliaire. Une telle plaque de séparation permet de créer de manière simple le canal auxiliaire comprenant l'élément chimique catalyseur directement accolé au troisième canal principal de circulation du fluide caloporteur.

Dans une forme de réalisation, la pile à combustible comprend au moins une plaque intermédiaire entre les plaques terminales définissant une première partie d'empilement comprenant une première pluralité de modules et une deuxième partie d'empilement comprenant une deuxième pluralité de modules. Les deux parties d'empilement peuvent ainsi être utilisées individuellement selon les besoins de la pile à combustible.

Dans une première forme de réalisation, chaque module de la première partie d'empilement est un module bipolaire et chaque module de la deuxième partie d'empilement est un module de chauffage. La première partie d'empilement et la deuxième partie d'empilement sont ainsi de natures différentes et sont aptes à générer soit uniquement de l'énergie électrique, soit uniquement de la chaleur. Une telle forme de réalisation permet de séparer les modules de chauffage des cellules électrochimiques, permettant une utilisation de la pile à combustible en deux temps, en alimentant tout d'abord la deuxième partie d'empilement en fluides pour le réchauffage de la pile, puis la première partie d'empilement pour générer de l'énergie électrique. Une séparation des cellules de chauffage et des cellules électrochimiques permet également par exemple de monter dans la plaque intermédiaire des cheminées différentes pour alimenter d'une part les cellules électrochimiques et d'autre part les modules de chauffage.

Dans une deuxième forme de réalisation, tous les modules de la première partie d'empilement et de la deuxième partie d'empilement sont des modules mixtes. Les modules des deux parties d'empilement sont ainsi de même nature et permettent par exemple une utilisation sectorielle de la pile. Grâce à la plaque intermédiaire, il est possible de n'alimenter en fluides que l'une des parties de l'empilement ou les deux. Une telle sectorisation permet de limiter dans certains cas l'utilisation d'un trop grand nombre de cellules mixtes pour générer de l'énergie électrique lorsque cela n'est pas utile, ce qui permet d'augmenter la durée de vie des cellules. Une telle forme de réalisation permet également de limiter l'apport en fluides dans la pile à combustible lorsque cela n'est pas nécessaire, ce qui permet une économie des fluides et permet également d'accroitre l'autonomie de la pile à combustible.

De manière préférée, l'élément chimique catalyseur est du platine, permettant l'utilisation d'un élément chimique connu dont l'application dans le canal auxiliaire est simple.

L'invention concerne également un procédé d'utilisation d'une pile à combustible telle que décrite précédemment, le procédé d'utilisation comprend :
- une étape de chauffage de la pile à combustible par la circulation du fluide oxydant et du fluide réducteur dans le canal auxiliaire d'au moins un module de chauffage,
- puis, une étape de génération d'énergie électrique par la circulation du fluide oxydant et du fluide réducteur dans les modules bipolaires.

Dans un mode de mise en oeuvre, la pile à combustible présentant une température de fonctionnement, le procédé comprend, postérieurement à l'étape de génération d'énergie électrique, lorsque la température de fonctionnement de la pile à combustible est supérieure ou égale à un seuil prédéterminé, une étape d'arrêt de la circulation du fluide oxydant et du fluide réducteur dans le canal auxiliaire du module de chauffage, de manière à stopper la génération de chaleur à partir du mélange entre le fluide oxydant, le fluide réducteur et l'élément chimique catalyseur.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation schématique d'un empilement d'une pile à combustible de l'art antérieur.
[Fig.2] La [Fig.2] est une représentation schématique d'un module bipolaire de la pile à combustible de la [Fig.1].
[Fig.3] La [Fig.3] est une représentation schématique d'une pile à combustible selon une forme de réalisation l'invention.
[Fig.4] La [Fig.4] est une représentation schématique d'un module bipolaire de la pile à combustible de la [Fig.3].
[Fig.5] La [Fig.5] est une représentation schématique d'un module de chauffage de la pile à combustible de la [Fig.3].
[Fig.6] La [Fig.6] est une représentation schématique d'un module mixte de la pile à combustible de la [Fig.3], selon une première forme de réalisation de l'invention.
[Fig.7] La [Fig.7] est une représentation schématique d'un module mixte de la pile à combustible de la [Fig.3], selon une deuxième forme de réalisation de l'invention.
[Fig.8]
[Fig.9]
[Fig.10]
[Fig.11]
[Fig.12]

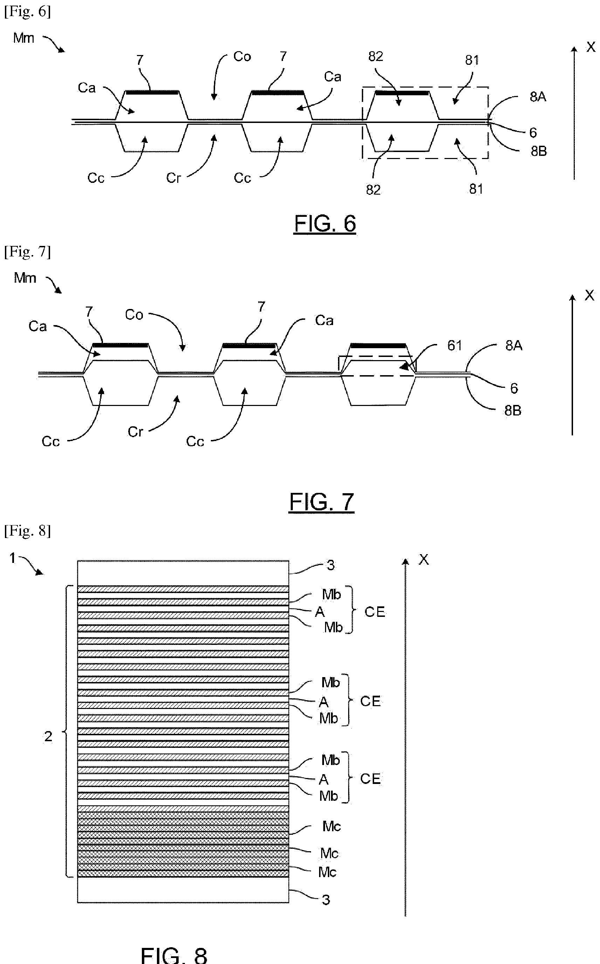

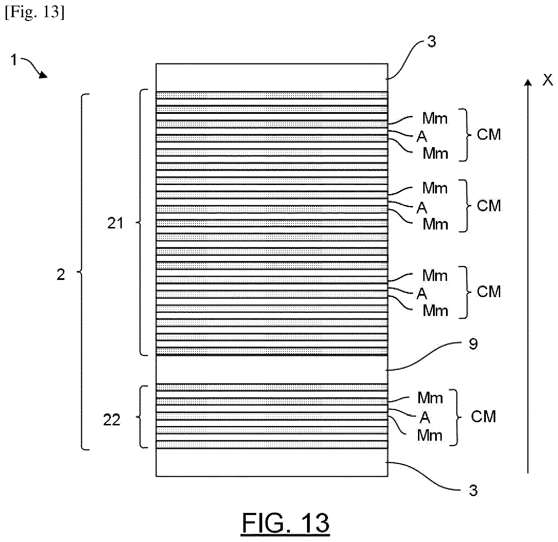

[Fig.13] Les figures 8 à 13 sont des représentations schématiques d'une pile à combustible selon différentes formes de réalisation l'invention.

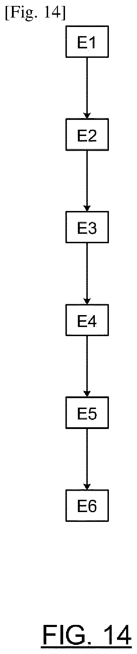

[Fig.14] La [Fig.14] est une représentation schématique des étapes d'un procédé d'utilisation de la pile à combustible selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne une pile à combustible hautes températures apte à générer de la chaleur au démarrage pour permettre d'alimenter la pile à combustible en réactifs et produire de l'électricité.

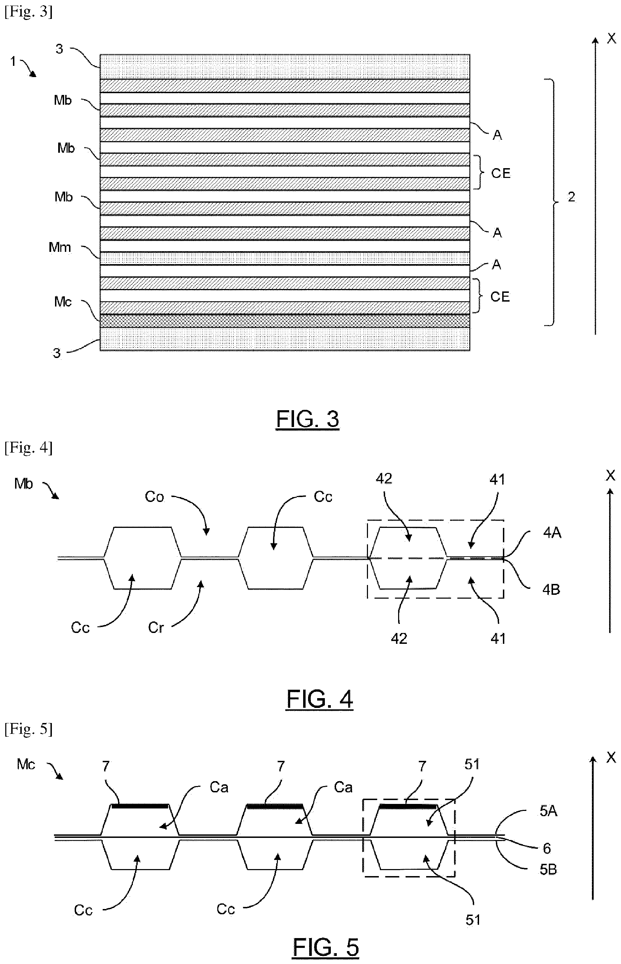

En référence à la [Fig.3] représentant une pile à combustible 1 selon une forme de réalisation de l'invention, la pile à combustible 1 s'étend longitudinalement selon un axe d'empilement X et comprend une alternance de modules bipolaires Mb et d'assemblages membrane-électrodes A de manière à former un empilement 2 de cellules électrochimiques CE. La pile à combustible 1 comprend également deux plaques terminales 3 s'étendant aux extrémités de l'empilement 2, qui permettent la distribution des différents fluides réactifs. Comme cela est connu, la pile à combustible 1 est ainsi alimentée par un fluide oxydant et un fluide réducteur, par exemple du dihydrogène et du dioxygène, et par un fluide caloporteur pour la régulation thermique de la pile.

En référence à la [Fig.4], chaque module bipolaire Mb comprend deux plaques bipolaires 4A, 4B montées en vis-à-vis l'une de l'autre, les deux plaques bipolaires 4A, 4B étant de préférence soudées l'une à l'autre. Chaque plaque bipolaire 4A, 4B comprend des portions concaves 41 et des portions convexes 42, qui permettent la formation de canaux pour la circulation des fluides réactifs. Plus précisément, les portions concaves 41 sont extérieures au module bipolaire Mb et permettent de part et d'autre du module bipolaire Mb, la circulation du fluide oxydant et du fluide réducteur respectivement par un premier canal principal Co de circulation du fluide oxydant et un deuxième canal principal Cr de circulation du fluide réducteur. Les portions convexes 42 sont intérieures au module bipolaire Mb et forment ensemble un troisième canal principal Ce de circulation du fluide caloporteur. Le troisième canal principal Ce est ainsi un canal interne au module bipolaire Mb.

Comme cela est connu, les fluides oxydant et réducteur réagissent lorsqu'ils sont mis en contact au travers d'un assemblage membrane-électrode dans une réaction d'oxydo-réduction de manière à générer de l'énergie électrique.

Les plaques bipolaires 4A, 4B sont de préférence réalisées dans un matériau métallique ou composite de manière à être robuste. Pour alimenter chaque module bipolaire Mb en fluides oxydant, réducteur et caloporteur, les plaques terminales 3 comprennent une pluralité de cheminées principales (non représentées), reliées aux canaux principaux Co, Cr, Cc. Les plaques bipolaires 4A, 4B d'une cellule électrochimique CE sont connues en soi et ne seront pas décrites plus en détail dans ce document.

En référence à la [Fig.3], la pile à combustible 1 selon l'invention comprend en outre un module de chauffage Mc monté entre les plaques terminales 3.

Comme représenté sur la [Fig.5], le module de chauffage Mc comprend deux plaques de chauffage 5A, 5B montées en vis-à-vis l'une de l'autre. Dans cet exemple, chaque plaque de chauffage 5A, 5B possède des propriétés analogues à celles d'une plaque bipolaire 4A, 4B mais il va de soi qu'elles pourraient être différentes. Chaque plaque de chauffage 5A, 5B comprend des portions convexes 51, intérieures au module de chauffage Mc, formant un canal de circulation de fluides. Le module de chauffage Mc comprend ainsi un canal auxiliaire Ca, configuré pour permettre la circulation d'un mélange de fluide oxydant et de fluide réducteur. Le module de chauffage Mc est ainsi configuré pour permettre le chauffage de la pile à combustible 1 par conduction de la chaleur dans les différents modules, comme cela sera décrit plus en détails par la suite.

Dans une forme de réalisation préférée, le module de chauffage Mc comprend également une plaque de séparation 6, montée entre les deux plaques de chauffage 5A, 5B de manière à former dans le canal de circulation à la fois un canal principal Ce de circulation du fluide caloporteur et le canal auxiliaire Ca de circulation d'un mélange de fluide oxydant et de fluide réducteur. Autrement dit, de manière préférée, le module de chauffage Mc comporte deux canaux internes distincts : un canal principal Ce de circulation du fluide caloporteur et un canal auxiliaire Ca. Le canal auxiliaire Ca est ainsi configuré pour chauffer le fluide caloporteur circulant dans le canal principal Cc, comme cela sera décrit plus en détails dans la suite de ce document.

Dans cet exemple, la plaque de séparation 6 se présente sous la forme d'une plaque plane présentant des propriétés similaires aux propriétés d'une plaque bipolaire 4A, 4B.

Dans cette forme de réalisation, le module de chauffage Mc comprend uniquement le troisième canal principal Ce de circulation du fluide caloporteur et le canal auxiliaire Ca. Le module de chauffage Mc permet ainsi de ne générer que du chauffage, sans générer d'énergie électrique, ce qui permet la formation d'un module de chauffage Mc simple.

Dans cet exemple, le module de chauffage Mc est configuré pour être alimenté en fluide oxydant, en fluide réducteur et en fluide caloporteur par l'intermédiaire des cheminées des plaques terminales 3 reliées aux canaux Cc, Ca de circulation de fluides, comme cela est le cas dans un module bipolaire Mb classique. De manière alternative, les plaques terminales 3 peuvent également comprendre une cheminée supplémentaire pour alimenter directement le canal auxiliaire Ca en un mélange de fluide oxydant et de fluide réducteur.

Le canal auxiliaire Ca comprend un élément chimique catalyseur 7, configuré pour réagir avec le mélange de fluide oxydant et de fluide réducteur de manière à générer de la chaleur. De préférence, l'élément chimique catalyseur 7 se présente sous la forme d'une couche de platine, appliquée sur une surface intérieure du canal auxiliaire Ca, c'est à dire en surface des portions convexes 51 intérieures au module de chauffage Mc. Le platine présente des propriétés permettant de favoriser la réaction du mélange de fluide oxydant et de fluide réducteur et de générer de la chaleur et de l'eau. Il va de soi que l'élément chimique catalyseur 7 peut se présenter sous une forme différente.

Le canal auxiliaire Ca est configuré pour chauffer du fait de la réaction exothermique entre le fluide oxydant, le fluide réducteur et l'élément chimique catalyseur 7. Le canal principal Ce de circulation du fluide caloporteur étant accolé au canal auxiliaire Ca dans le module de chauffage Mc, le fluide caloporteur est efficacement chauffé. Le fluide caloporteur chauffé est configuré pour circuler dans le module de chauffage Mc puis dans chaque module bipolaire Mb pour réchauffer la pile à combustible 1 au démarrage, comme cela sera décrit plus en détail par la suite.

Le module de chauffage Mc permet ainsi de chauffer la pile à combustible 1 par circulation du fluide caloporteur mais également par chauffage des modules bipolaires Mb adjacents par conduction thermique. Dans le cas d'un module de chauffage exempt de canal principal Ce de circulation du fluide caloporteur, le module de chauffage Mc permet de chauffer la pile à combustible 1 par conduction thermique entre les différents modules.

Il a été représenté à la [Fig.3] une pile à combustible 1 comprenant un unique module de chauffage Mc mais il va de soi qu'elle pourrait comprendre une pluralité de modules de chauffage Mc, comme représenté sur la [Fig.8].

De manière préférée, au moins un des modules bipolaires Mb de la pile à combustible 1 est un module de chauffage Mc. Le module est alors désigné module mixte Mm et est configuré à la fois pour générer de la chaleur et de l'énergie électrique.

En référence aux figures 6 et 7, le module mixte Mm comprend une première plaque bipolaire 8A et une deuxième plaque bipolaire 8B, montées en vis-à-vis l'une de l'autre. Les deux plaques bipolaires 8A, 8B sont de préférence similaires aux plaques bipolaires 4A, 4B d'un module bipolaire Mb, décrit précédemment. A ce titre, chaque plaque bipolaire 8A, 8B comprend des portions concaves 81, extérieures au module mixte Mm, et des portions convexes 82, intérieures au module mixte Mm. Les portions convexes 82 sont montées en vis-à-vis de manière à permettre la fixation des deux plaques bipolaires 8A 8B pour former le module mixte Mm. De manière similaire au module bipolaire Mb, les portions concaves 81 permettent la formation d'un premier canal principal Co de circulation du fluide oxydant et d'un deuxième canal principal Cr de circulation du fluide réducteur. Les portions convexes 82 forment ensemble un canal de circulation.

Selon une forme de réalisation préférée de l'invention, chaque module mixte Mm comprend en outre une plaque de séparation 6, montée entre la première plaque bipolaire 8A et la deuxième plaque bipolaire 8B de manière à séparer le canal de circulation formé par les portions convexes 81 en deux canaux distincts. La plaque de séparation 6, similaire à une plaque de séparation 6 du module de chauffage Mc décrite précédemment, permet ainsi de former un troisième canal principal Ce de circulation du fluide caloporteur et un canal auxiliaire Ca. Autrement dit, le module mixte Mm comporte deux canaux internes distincts : un canal principal Ce de circulation du fluide caloporteur et un canal auxiliaire Ca.

De manière similaire au module de chauffage Mc, le canal auxiliaire Ca comprend un élément chimique catalyseur 7, configuré pour réagir avec un mélange de fluide oxydant et de fluide réducteur pour générer de la chaleur. Le troisième canal principal Ce de circulation de fluide caloporteur est ainsi accolé au canal auxiliaire Ca, de manière à chauffer efficacement le fluide caloporteur au contact du canal auxiliaire Ca.

La plaque de séparation 6 se présente de préférence sous la forme d'une plaque similaire aux plaques bipolaires 8A, 8B.

Dans une première forme de réalisation, représentée sur la [Fig.6], la plaque de séparation 6 est exempte de portions concaves ou convexes et se présente sous la forme d'une plaque plane. Une telle plaque de séparation 6 permet la formation d'un module mixte Mm simple, dans lequel le troisième canal principal Ce de circulation du fluide caloporteur et le canal auxiliaire Ca présentent un volume similaire.

Dans une deuxième forme de réalisation, représentée sur la [Fig.7], la plaque de séparation 6 comprend des portions convexes 61, de manière à permettre un volume dans le troisième canal principal Ce de circulation du fluide caloporteur plus important que le volume dans le canal auxiliaire Ca. Une telle forme de réalisation permet au module mixte Mm de permettre la circulation d'un volume sensiblement équivalent de fluide caloporteur dans le troisième canal principal Ce dans des modules de types différents (module bipolaire Mb, module de chaleur Mc et module mixte Mm). Ainsi, le refroidissement du module mixte Mm demeure performant lors de la génération d'énergie électrique.

Ce document présente l'exemple d'un module mixte Mm comprenant une plaque de séparation 6 pour la formation du canal auxiliaire Ca, cependant il va de soi que le module mixte Mm peut se présenter sous une forme différente. En particulier, le module mixte Mm peut être exempt de plaque de séparation 6 entre les deux plaques bipolaires 8A, 8B. Dans ce cas, le troisième canal principal Ce de chaque module mixte Mm dédié à la circulation de fluide caloporteur pourrait présenter une ou plusieurs cavités recouvertes de l'élément chimique catalyseur 7.

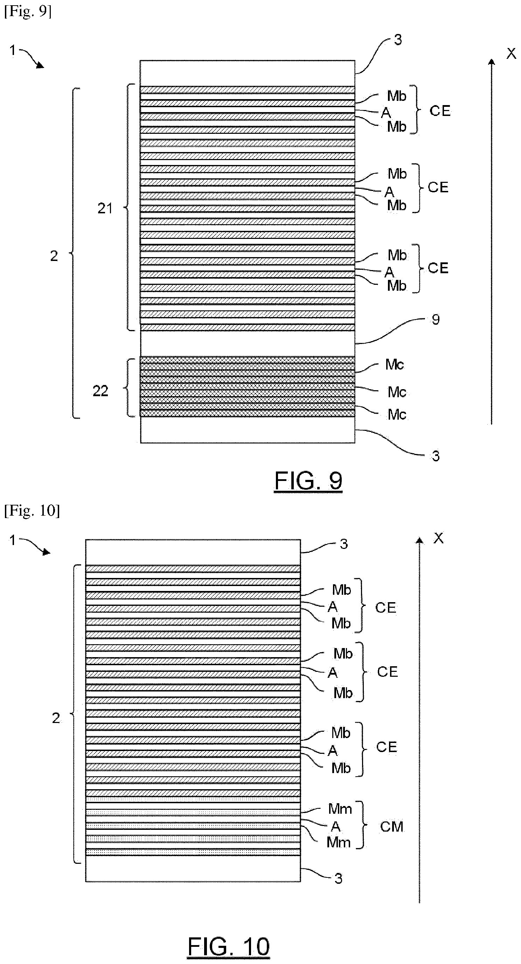

Dans cette forme de réalisation, un assemblage membrane-électrodes A est de préférence positionné entre deux modules mixtes Mm de manière à former une cellule mixte CM apte à générer à la fois de l'énergie électrique et de la chaleur, comme représenté par exemple sur la [Fig.10].

De préférence encore, la pile à combustible 1 comprend une pluralité de modules mixtes Mm et un assemblage membrane-électrodes A positionné entre chaque couple de deux modules mixtes Mm, de manière à former une pluralité de cellules mixtes CM aptes à générer de l'énergie électrique et de la chaleur. Une pluralité de cellules mixtes CM permet un chauffage rapide de la pile à combustible 1 au démarrage, permettant avantageusement un démarrage plus rapide et donc une efficacité accrue. Les cellules mixtes CM sont ainsi chauffées de manière interne préalablement à leur utilisation.

Dans cet exemple, de manière préférée, le module mixte Mm est configuré pour être alimenté en fluide oxydant, en fluide réducteur et en fluide caloporteur par l'intermédiaire des cheminées des plaques terminales 3 reliées aux canaux de circulation de fluide, comme cela est le cas dans un module bipolaire Mb classique. Dans cette forme de réalisation, chaque plaque terminale 3 peut également comprendre une cheminée supplémentaire pour alimenter directement le canal auxiliaire Ca en un mélange de fluide oxydant et de fluide réducteur.

Grâce à la plaque de séparation 6 selon l'invention, chaque module de chauffage Mc et chaque module mixte Mm présente un encombrement sensiblement similaire à l'encombrement d'un module bipolaire Mb tout en intégrant une fonction de chauffage, ce qui permet de réchauffer la pile à combustible 1 sans en augmenter l'encombrement général. Comme cela sera présenté par la suite, un ou plusieurs modules de chauffage Mc et/ou un ou plusieurs modules mixte Mm peuvent être intégrés à un empilement de modules bipolaires Mb pour réchauffer l'empilement 2.

En référence aux figures 9 et 13, dans une forme de réalisation, la pile à combustible 1 comprend une plaque intermédiaire 9 entre les plaques terminales 3 définissant une première partie d'empilement 21 et une deuxième partie d'empilement 22. Une telle plaque intermédiaire 9 permet de former une séparation entre les modules de la pile à combustible 1, en particulier, pour alimenter ou évacuer des fluides d'une ou de l'autre des parties d'empilement 21, 22 de la pile à combustible 1.

Dans une première forme de réalisation, représentée sur la [Fig.9], la première partie d'empilement 21 et la deuxième partie d'empilement 22 sont de natures différentes. En particulier, chaque module de la première partie d'empilement 21 est un module bipolaire Mb et chaque module de la deuxième partie d'empilement 22 est un module de chauffage Mc. Ainsi, la première partie d'empilement 21 et la deuxième partie d'empilement 22 sont chacune apte à générer soit uniquement de l'énergie électrique, soit uniquement de la chaleur. Dans cette forme de réalisation, la pile à combustible 1 est formée de manière simple par une première partie d'empilement 21 similaire à l'empilement d'une pile à combustible de l'art antérieur. Il est ainsi simple par exemple d'ajouter la deuxième partie d'empilement 22 dédiée au chauffage à une pile à combustible existante et connue.

Dans une deuxième forme de réalisation, représentée sur la [Fig.13], la première partie d'empilement 21 et la deuxième partie d'empilement 22 sont de même nature. De préférence, dans cette forme de réalisation, la première partie d'empilement 21 et la deuxième partie d'empilement 22 comprennent chacune une pluralité de modules mixtes Mm, aptes à générer à la fois de l'énergie électrique et de la chaleur. Une telle forme de réalisation permet avantageusement une utilisation sectorielle de la pile à combustible 1 selon les besoins en puissance de la pile. En cas de nécessité d'énergie électrique limitée, il est possible grâce à cette forme de réalisation, de n'utiliser par exemple que la première partie d'empilement 21, en alimentant en fluides uniquement cette partie d'empilement. A l'inverse, en cas de nécessité d'une quantité importante d'énergie électrique, il est possible d'utiliser à la fois la première partie d'empilement 21 et la deuxième partie d'empilement 22.

Ce document présente l'exemple d'une unique plaque intermédiaire 9, cependant il va de soi que la pile à combustible 1 pourrait tout aussi bien comprendre un nombre différent de plaques intermédiaires 9. En particulier, la pile à combustible 1 pourrait comprendre deux plaques intermédiaires 9, délimitant trois parties d'empilement distincts. Les trois parties d'empilement permettraient soit une utilisation sectorielle telle que décrite précédemment, soit la délimitation par exemple d'une partie d'empilement centrale comprenant une pluralité de cellules électrochimiques CE et deux parties d'empilement latérales de part et d'autre de la partie d'empilement centrale comprenant chacune une pluralité de modules de chauffage Mc. Les deux parties d'empilement latérales permettraient dans cette forme de réalisation de réchauffer la partie d'empilement centrale de part et d'autre.

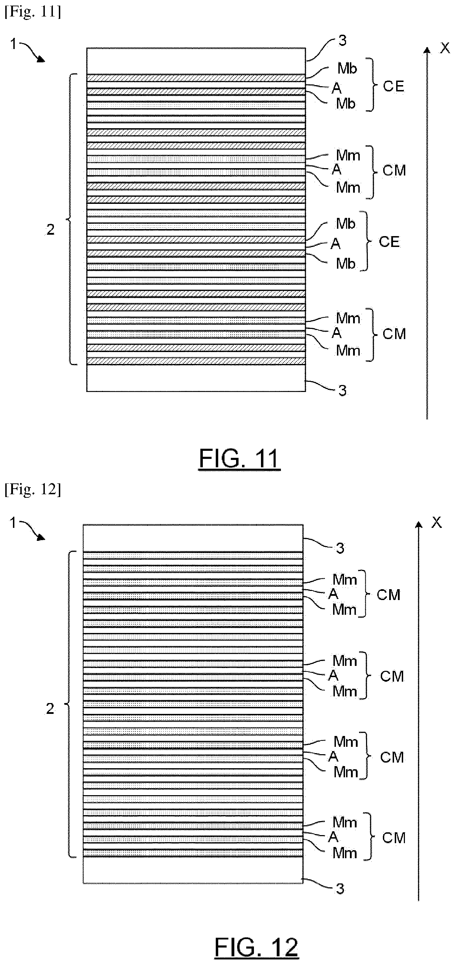

En référence aux figures 8 à 13, la pile à combustible 1 selon l'invention comprend une pluralité de modules suivant une pluralité d'empilements 2 possibles. A titre d'exemple, la pile à combustible 1 peut comprendre successivement suivant l'axe d'empilement X entre les deux plaques terminales 3 :
- une pluralité de modules de chauffage Mc, puis une pluralité de cellules électrochimiques CE, comme représenté sur la [Fig.8] ;
- une pluralité de modules de chauffage Mc, une plaque intermédiaire 9, puis une pluralité de cellules électrochimiques CE, comme représenté sur la [Fig.9]
- une pluralité de cellules mixtes CM, puis une pluralité de cellules électrochimiques CE, comme représenté sur la [Fig.10] ;
- une pluralité de couples d'une cellule électrochimique CE et d'une cellule mixte CM, comme représenté sur la [Fig.11] ;
- une pluralité de cellules mixtes CM, comme représenté sur la [Fig.12] ;
- une première pluralité de cellules mixtes CM, une plaque intermédiaire 9, puis une deuxième pluralité de cellules mixtes CM, comme représenté sur la [Fig. 13].

Il est avantageux d'utiliser uniquement des cellules mixtes CM afin de chauffer de manière uniforme la pile à combustible 1 de manière intégrée.

Les différentes formes de réalisation présentées ci-dessus sont données à titre d'exemple et ne présentent pas une liste exhaustive des empilements possibles. Il va de soi que l'empilement 2 de la pile à combustible 1 peut comprendre tout empilement d'une ou plusieurs cellules électrochimiques CE et/ou d'une ou plusieurs cellules mixtes CM associées ou non à un ou plusieurs modules de chauffage Mc.

Il va dorénavant être décrit un procédé d'utilisation de la pile à combustible 1 telle que décrite précédemment, en référence à la [Fig.14]. Dans cet exemple, la pile à combustible 1 comprend une pluralité de modules de chauffage Mc et une pluralité de modules bipolaires Mb, chaque couple de deux modules bipolaires Mb étant séparés par un assemblage membrane-électrodes A pour former une pluralité de cellules électrochimiques CE comme illustré à la [Fig.8].

Le procédé comprend tout d'abord une étape E1 de circulation du fluide oxydant et du fluide réducteur dans le canal auxiliaire Ca de chaque module de chauffage Mc. Le mélange du fluide oxydant et du fluide réducteur est alors mis en contact avec l'élément chimique catalyseur 7, entraînant la génération de chaleur, dans une étape E2 de chauffage.

Le fluide caloporteur circule alors dans le troisième canal principal Ce de chaque module de chauffage Mc et chauffe dans une étape E3. Le fluide caloporteur circule ensuite, dans une étape E4, dans le troisième canal principal Ce de chaque module bipolaire Mb, de manière à réchauffer chaque cellule électrochimique CE pour permettre leur montée en température initiale. De manière préférée, les étapes E1 et E2 sont mises en oeuvre de manière simultanée.

Lorsque la température de la pile à combustible 1 a atteint une température de fonctionnement supérieure ou égale à un seuil prédéterminé, par exemple 150°C, le procédé comprend enfin une étape E5 d'arrêt de la circulation du fluide oxydant et du fluide réducteur dans le canal auxiliaire Ca de chaque module de chauffage Mc, de manière à stopper la génération de chaleur à partir du mélange entre le fluide oxydant, le fluide réducteur et l'élément chimique catalyseur 7.

Le fluide oxydant et le fluide réducteur circulent ensuite dans le premier canal principal Co et dans le deuxième canal principal Cr de chaque cellule électrochimique CE, de manière à générer de l'énergie électrique, dans une étape E6.

De manière alternative, lorsque la pile à combustible 1 a atteint une température initiale, par exemple 100°C, le fluide oxydant et le fluide réducteur commencent à circuler dans le premier canal principal Co et dans le deuxième canal principal Cr de chaque cellule électrochimique CE, de manière à commencer la génération de l'énergie électrique. La température continue de monter jusqu'à atteindre la température de fonctionnement de la pile à combustible 1, de préférence comprise entre 150°C et 180°C. Lorsque la température de la pile à combustible 1 atteint la température de fonctionnement, la circulation du fluide oxydant et du fluide réducteur est stoppée dans le canal auxiliaire Ca de chaque module de chauffage Mc, de manière analogue à l'étape d'arrêt E5 décrite précédemment. Le fluide oxydant et le fluide réducteur continuent alors de circuler dans le premier canal principal Co et dans le deuxième canal principal Cr de chaque cellule électrochimique CE, de manière à générer de l'énergie électrique.

Dans un mode de mise en oeuvre alternatif, dans le cas d'un module de chauffage Mc étant exempt de canal de circulation Ce du fluide caloporteur, le procédé comprend l'étape E1 de circulation du fluide oxydant et du fluide réducteur dans le canal auxiliaire Ca de chaque module de chauffage Mc. Le mélange de fluide oxydant et de fluide réducteur est mis en contact dans le canal auxiliaire Ca avec l'élément chimique catalyseur 7, entrainant la génération de chaleur, dans l'étape E2 de chauffage. Chaque cellule électrochimique CE et donc chaque module bipolaire Mb est chauffé par conduction. Lorsque la pile à combustible 1 atteint la température initiale ou la température de fonctionnement, le fluide oxydant et le fluide réducteur circulent dans le premier canal principal Co et dans le deuxième canal principal Cr de chaque cellule électrochimique CE pour permettre la génération d'énergie électrique.

La pile à combustible selon l'invention permet avantageusement de chauffer chaque cellule électrochimique de manière directe par la circulation du fluide caloporteur réchauffé dans les modules de chauffage, intégrés à la pile à combustible entre les deux plaques terminales ou par conduction entre les cellules électrochimiques CE. Les modules de chauffage internes à la pile à combustible, positionnés au plus proche des cellules électrochimiques permettent de limiter les pertes de chaleur tout en limitant l'encombrement de la pile à combustible qui ne nécessite ni un dispositif extérieur, ni une batterie d'alimentation par exemple.

Une pile à combustible comprenant en empilement d'une pluralité de cellules mixtes permet au moyen de cellules dans lesquels les modules mixtes intègrent un canal auxiliaire pour le chauffage du fluide caloporteur permet au moyen d'une pile à combustible présentant un encombrement semblable à l'encombrement d'une pile à combustible de l'art antérieur d'intégrer directement la fonction de chauffage, ce qui permet de réchauffer la pile à combustible pour une utilisation dans tout environnement et sous toute température, tout en permettant de ne pas augmenter ni la masse, ni l'encombrement de la pile à combustible, permettant une utilisation embarquée, notamment dans un aéronef par exemple.

## Revendications

1. Pile à combustible (1) s'étendant longitudinalement suivant un axe d'empilement (X) et comprenant une alternance de modules bipolaires (Mb) et d'assemblages membrane-électrodes (A) de manière à former un empilement (2) comprenant au moins une cellule électrochimique (CE), deux plaques terminales (3) s'étendant aux extrémités de l'empilement (2), chaque module bipolaire (Mb) comprenant au moins un premier canal principal (Co) de circulation d'un fluide oxydant, un deuxième canal principal (Cr) de circulation d'un fluide réducteur et un troisième canal principal (Cc) de circulation d'un fluide caloporteur, la pile à combustible (1) comprenant :
• au moins un module de chauffage (Mc), monté entre les plaques terminales (3), comprenant au moins un canal auxiliaire (Ca) comprenant un élément chimique catalyseur (7), le canal auxiliaire (Ca) étant configuré pour faire circuler un mélange de fluide oxydant et de fluide réducteur de manière à générer de la chaleur lors de la réaction du fluide oxydant, du fluide réducteur et de l'élément chimique catalyseur (7) afin de chauffer la pile à combustible (1),
• au moins un module bipolaire (Mb) étant un module de chauffage (Mc), désigné module mixte (Mm), le module mixte (Mm) comprenant au moins un premier canal principal (Co) de circulation du fluide oxydant, un deuxième canal principal (Cr) de circulation du fluide réducteur, un troisième canal principal (Cc) de circulation du fluide caloporteur et un canal auxiliaire (Ca), comprenant un élément chimique catalyseur (7), qui est configuré pour faire circuler un mélange de fluide oxydant et de fluide réducteur,
• chaque module mixte (Mm) comprend une première plaque bipolaire (8A) et une deuxième plaque bipolaire (8B), chaque plaque bipolaire (8A,8B) comprenant un moins une portion concave (81) extérieure au module mixte (Mm) et une portion convexe (82) intérieure au module mixte (Mm), la portion convexe (82) de la première plaque bipolaire (8A) étant positionnée en vis-à-vis de la portion convexe (82) de la deuxième plaque bipolaire (8B), les portions convexes (82) montés en vis-à-vis formant un canal de circulation, la pile à combustible (1) **étant caractérisée en ce que** chaque module mixte (Mm) comprend une plaque de séparation (6), montée entre la première plaque bipolaire (8A) et la deuxième plaque bipolaire (8B) de manière à former dans le canal de circulation, le troisième canal principal (Cc) de circulation du fluide caloporteur et le canal auxiliaire (Ca).

2. Pile à combustible (1) selon la revendication 1, dans laquelle au moins un module de chauffage (Mc) comprend au moins un canal principal (Cc) de circulation du fluide caloporteur.

3. Pile à combustible (1) selon l'une des revendications 1 et 2, dans laquelle au moins un module de chauffage (Mc) est exempt de canal principal (Co) de circulation du fluide oxydant et de canal principal (Cr) de circulation du fluide réducteur.

4. Pile à combustible (1) selon l'une des revendications 1 à 3, comprenant une pluralité de modules de chauffage (Mc).

5. Pile à combustible (1) selon l'une des revendications 1 à 4, comportant au moins deux modules mixtes (Mm) et au moins un assemblage membrane-électrodes (A) positionné entre les deux modules mixtes (Mm) de manière à former une cellule mixte (CM) apte à générer à la fois de l'énergie électrique et de la chaleur.

6. Pile à combustible (1) selon l'une des revendications 1 à 5, comprenant une alternance d'une pluralité de modules mixtes (Mm) et d'assemblages membrane-électrodes (A) de manière à former un empilement (2) d'une pluralité de cellules mixtes (CM).

7. Pile à combustible (1) selon l'une des revendications 1 à 6, comprenant au moins une plaque intermédiaire (9) entre les plaques terminales (3) définissant une première partie d'empilement (21) comprenant une première pluralité de modules et une deuxième partie d'empilement (22) comprenant une deuxième pluralité de modules.

8. Pile à combustible (1) selon la revendication 7, dans laquelle chaque module de la première partie d'empilement (21) est un module bipolaire (Mb) et chaque module de la deuxième partie d'empilement (22) est un module de chauffage (Mc).

9. Pile à combustible (1) selon la revendication 7, dans laquelle tous les modules de la première partie d'empilement (21) et de la deuxième partie d'empilement (22) sont des modules mixtes (Mm).

10. Pile à combustible (1) selon l'une des revendications 1 à 9, dans laquelle l'élément chimique catalyseur (7) est du platine.

11. Procédé d'utilisation d'une pile à combustible (1) selon l'une des revendications 1 à 10, le procédé d'utilisation comprend :
• une étape de chauffage (E2) de la pile à combustible (1) par la circulation du fluide oxydant et du fluide réducteur dans le canal auxiliaire (Ca) d'au moins un module de chauffage (Mc),
• puis, une étape de génération d'énergie électrique (E6) par la circulation du fluide oxydant et du fluide réducteur dans les modules bipolaires (Mb).

## Patentansprüche

1. Brennstoffzelle (1), die sich längs gemäß einer Stapelachse (X) erstreckt und abwechselnd bipolare Module (Mb) und Membran-ElektrodenAnordnungen (A) umfasst, so dass ein Stapel (2) gebildet wird, der mindestens eine elektrochemische Zelle (CE) umfasst, wobei sich zwei Endplatten (3) an den Enden des Stapels (2) erstrecken, wobei jedes bipolare Modul (Mb) mindestens einen ersten Hauptkanal (Co) für die Zirkulation eines Oxidationsfluids, einen zweiten Hauptkanal (Cr) für die Zirkulation eines Reduktionsfluids und einen dritten Hauptkanal (Cc) für die Zirkulation eines Wärmeträgerfluids umfasst, wobei die Brennstoffzelle (1) umfasst:
• mindestens ein Heizmodul (Mc), das zwischen den Endplatten (3) angebracht ist, umfassend mindestens einen Hilfskanal (Ca), der ein chemisches Katalysatorelement (7) umfasst, wobei der Hilfskanal (Ca) dazu ausgelegt ist, ein Gemisch aus Oxidationsfluid und aus Reduktionsfluid derart in Zirkulation zu versetzen, dass bei der Reaktion des Oxidationsfluids, des Reduktionsfluids und des chemischen Katalysatorelements (7) Wärme erzeugt wird, um die Brennstoffzelle (1) zu erwärmen,
• mindestens ein bipolares Modul (Mb), das ein Heizmodul (Mc) ist, bezeichnet als gemischtes Modul (Mm), wobei das gemischte Modul (Mm) mindestens einen ersten Hauptkanal (Co) für die Zirkulation des Oxidationsfluids, einen zweiten Hauptkanal (Cr) für die Zirkulation des Reduktionsfluids, einen dritten Hauptkanal (Cc) für die Zirkulation des Wärmeträgerfluids und einen Hilfskanal (Ca) umfasst, der ein chemisches Katalysatorelement (7) umfasst, der dazu ausgelegt ist, ein Gemisch aus Oxidationsfluid und aus Reduktionsfluid in Zirkulation zu versetzen,
• wobei jedes gemischte Modul (Mm) eine erste bipolare Platte (8A) und eine zweite bipolare Platte (8B) umfasst, wobei jede bipolare Platte (8A, 8B) mindestens einen konkaven Abschnitt (81) außerhalb des gemischten Moduls (Mm) und einen konvexen Abschnitt (82) innerhalb des gemischten Moduls (Mm) umfasst, wobei der konvexe Abschnitt (82) der ersten bipolaren Platte (8A) gegenüber dem konvexen Abschnitt (82) der zweiten bipolaren Platte (8B) positioniert ist, wobei die gegenüberliegend angebrachten konvexen Abschnitte (82) einen Zirkulationskanal bilden, wobei die Brennstoffzelle (1) **dadurch gekennzeichnet ist, dass** jedes gemischte Modul (Mm) eine Trennplatte (6) umfasst, die zwischen der ersten bipolaren Platte (8A) und der zweiten bipolaren Platte (8B) angebracht ist, so dass im Zirkulationskanal der dritte Hauptkanal (Cc) für die Zirkulation des Wärmeträgerfluids und der Hilfskanal (Ca) gebildet werden.

2. Brennstoffzelle (1) nach Anspruch 1, wobei mindestens ein Heizmodul (Mc) mindestens einen Hauptkanal (Cc) für die Zirkulation des Wärmeträgerfluids umfasst.

3. Brennstoffzelle (1) nach einem der Ansprüche 1 und 2, wobei mindestens ein Heizmodul (Mc) keinen Hauptkanal (Co) für die Zirkulation des Oxidationsfluids und keinen Hauptkanal (Cr) für die Zirkulation des Reduktionsfluids hat.

4. Brennstoffzelle (1) nach einem der Ansprüche 1 bis 3, umfassend eine Vielzahl von Heizmodulen (Mc).

5. Brennstoffzelle (1) nach einem der Ansprüche 1 bis 4, aufweisend mindestens zwei gemischte Module (Mm) und mindestens eine Membran-Elektroden-Anordnung (A), die zwischen zwei gemischten Modulen (Mm) positioniert ist, so dass eine gemischte Zelle (CM) gebildet wird, die imstande ist, gleichzeitig elektrische Energie als auch Wärme zu erzeugen.

6. Brennstoffzelle (1) nach einem der Ansprüche 1 bis 5, umfassend abwechselnd eine Vielzahl von gemischten Modulen (Mm) und von Membran-Elektroden-Anordnungen (A), so dass ein Stapel (2) aus einer Vielzahl von gemischten Zellen (CM) gebildet wird.

7. Brennstoffzelle (1) nach einem der Ansprüche 1 bis 6, umfassend mindestens eine Zwischenplatte (9) zwischen den Endplatten (3), die einen ersten Stapelabschnitt (21) definiert, der eine erste Vielzahl von Modulen umfasst, und einen zweiten Stapelabschnitt (22), der eine zweite Vielzahl von Modulen umfasst.

8. Brennstoffzelle (1) nach Anspruch 7, wobei jedes Modul des ersten Stapelabschnitts (21) ein bipolares Modul (Mb) ist und jedes Modul des zweiten Stapelabschnitts (22) ein Heizmodul (Mc) ist.

9. Brennstoffzelle (1) nach Anspruch 7, wobei alle Module des ersten Stapelabschnitts (21) und des zweiten Stapelabschnitts (22) gemischte Module (Mm) sind.

10. Brennstoffzelle (1) nach einem der Ansprüche 1 bis 9, wobei das chemische Katalysatorelement (7) Platin ist.

11. Verfahren zur Verwendung einer Brennstoffzelle (1) nach einem der Ansprüche 1 bis 10, wobei das Verwendungsverfahren umfasst:
• einen Heizschritt (E2) der Brennstoffzelle (1) durch die Zirkulation des Oxidationsfluids und des Reduktionsfluids im Hilfskanal (Ca) von mindestens einem Heizmodul (Mc),
• dann einen Schritt des Erzeugens elektrischer Energie (E6) durch die Zirkulation des Oxidationsfluids und des Reduktionsfluids in den bipolaren Modulen (Mb).

## Claims

1. Fuel cell (1) extending longitudinally along a stacking axis (X) and comprising alternating bipolar modules (Mb) and membrane-electrode assemblies (A) so as to form a stack (2) comprising at least one electrochemical cell (CE), two end plates (3) extending to the ends of the stack (2), each bipolar module (Mb) comprising at least one first main channel (Co) for the circulation of an oxidizing fluid, a second main channel (Cr) for the circulation of a reducing fluid and a third main channel (Cc) for the circulation of a heat-transfer fluid, the fuel cell (1) comprising:
- at least one heating module (Mc), mounted between the end plates (3), comprising at least one auxiliary channel (Ca) comprising a catalyst chemical element (7), the auxiliary channel (Ca) being configured to circulate a mixture of oxidizing fluid and reducing fluid so as to generate heat during the reaction of the oxidizing fluid, the reducing fluid and the catalyst chemical element (7) in order to heat the fuel cell (1),
- at least one bipolar module (Mb) being a heating module (Mc), referred to as a mixed module (Mm), the mixed module (Mm) comprising at least one first main channel (Co) for the circulation of the oxidizing fluid, a second main channel (Cr) for the circulation of the reducing fluid, a third main channel (Cc) for the circulation of the heat-transfer fluid and an auxiliary channel (Ca), comprising a catalyst chemical element (7), which is configured to circulate a mixture of oxidizing fluid and reducing fluid,
- each mixed module (Mm) comprises a first bipolar plate (8A) and a second bipolar plate (8B), each bipolar plate (8A, 8B) comprising at least one concave portion (81) external to the mixed module (Mm) and one convex portion (82) internal to the mixed module (Mm), the convex portion (82) of the first bipolar plate (8A) being positioned opposite the convex portion (82) of the second bipolar plate (8B), the convex portions (82) mounted opposite one another forming a circulation channel, the fuel cell (1) **being characterized in that** each mixed module (Mm) comprises a spacer plate (6), mounted between the first bipolar plate (8A) and the second bipolar plate (8B) so as to form in the circulation channel, the third main channel (Cc) for the circulation of the heat-transfer fluid and the auxiliary channel (Ca).

2. Fuel cell (1) according to claim 1, wherein the at least one heating module (Mc) comprises at least one main channel (Cc) for the circulation of the heat-transfer fluid.

3. Fuel cell (1) according to one of claims 1 and 2, wherein the at least one heating module (Mc) is free of a main channel (Co) for the circulation of the oxidizing fluid and of a main channel (Cr) for the circulation of the reducing fluid.

4. Fuel cell (1) according to one of claims 1 to 3, comprising a plurality of heating modules (Mc).

5. Fuel cell (1) according to one of claims 1 to 4, comprising at least two mixed modules (Mm) and at least one membrane-electrode assembly (A) positioned between the two mixed modules (Mm) so as to form a mixed cell (CM) capable of generating both electrical energy and heat.

6. Fuel cell (1) according to one of claims 1 to 5, comprising an alternation of a plurality of mixed modules (Mm) and membrane-electrode assemblies (A) so as to form a stack (2) of a plurality of mixed cells (CM).

7. Fuel cell (1) according to one of claims 1 to 6, comprising at least one intermediate plate (9) between the end plates (3) defining a first stacking part (21) comprising a first plurality of modules and a second stacking part (22) comprising a second plurality of modules.

8. Fuel cell (1) according to claim 7, wherein each module of the first stacking part (21) is a bipolar module (Mb) and each module of the second stacking part (22) is a heating module (Mc).

9. Fuel cell (1) according to claim 7, wherein all the modules of the first stacking part (21) and the second stacking part (22) are mixed modules (Mm).

10. Fuel cell (1) according to one of claims 1 to 9, wherein the catalyst chemical element (7) is platinum.

11. Method of using a fuel cell (1) according to one of claims 1 to 10, the method of use comprises:
- a heating step (E2) of the fuel cell (1) by circulating the oxidizing fluid and the reducing fluid in the auxiliary channel (Ca) of at least one heating module (Mc),
- then, a step of generating electrical energy (E6) by circulating the oxidizing fluid and reducing fluid in the bipolar modules (Mb).
